# EUROPÄISCHE PATENTSCHRIFT

(11) **EP 2 855 786 B1**
(45) Veröffentlichungstag und Bekanntmachung des Hinweises auf die Patenterteilung: **07.09.2016**
(21) Anmeldenummer: 13725641.8
(22) Anmeldetag: 24.05.2013
(51) Int. Cl.: E03B 7/07, C02F 1/00

(54) **WASSERANSCHLUSSANORDNUNG MIT KOMBINIERTEM WASSERVERTEILER UND WASSERSAMMLER**
WATER CONNECTION ARRANGEMENT WITH COMBINED WATER DISTRIBUTOR AND WATER COLLECTOR
SYSTÈME DE RACCORDEMENT À L'EAU DOTÉ D'UN DISTRIBUTEUR ET COLLECTEUR D'EAU COMBINÉ

(30) Priorität: 01.06.2012 DE 102012209318
(43) Veröffentlichungstag der Anmeldung: 08.04.2015
(73) Patentinhaber: Judo Wasseraufbereitung GmbH, 71364 Winnenden (DE)
(72) Erfinder: KÜHN, Walter, 71522 Backnang (DE); STALLMANN, Peter, 71522 Backnang (DE)
(74) Vertreter: Kohler Schmid Möbus Patentanwälte
(86) Internationale Anmeldenummer: PCT/EP2013/060785
(87) Internationale Veröffentlichungsnummer: WO 2013/178553

(56) Entgegenhaltungen:
- EP-A1- 0 563 011
- DE-A1- 3 038 460
- DE-A1-102007 010 641
- DE-U1-202007 001 107
- DE-U1-202010 008 759

## Beschreibung

Die Erfindung betrifft eine Wasseranschlussanordnung, umfassend einen kombinierten Wasserverteiler und Wassersammler, im folgenden Verteilsammler genannt, wobei der Verteilsammler aufweist
- einen im Wesentlichen gerade verlaufenden ersten Kanal, mit mehreren Wasserabnehmeranschlüssen zum ersten Kanal,
- einen im Wesentlichen gerade verlaufenden zweiten Kanal, mit mehreren Wasserabnehmeranschlüssen zum zweiten Kanal,
- einen ersten Versorgungsanschluss zum ersten Kanal, und
- einen zweiten Versorgungsanschluss zum zweiten Kanal,
wobei die beiden Versorgungsanschlüsse an gegenüberliegenden Enden des Verteilsammlers ausgebildet sind,
und dass die Wasseranschlussanordnung weiterhin mehrere Wasserbehandlungsgeräte aufweist, die jeweils an einem
Wasserabnehmeranschluss des ersten Kanals und einem
Wasserabnehmeranschluss des zweiten Kanals angeschlossen sind.

Eine solche Wasseranschlussanordnung ist durch die DE 20 2007 001 107 U1 bekannt geworden.

Wasser, das durch die öffentlichen Versorgungsnetze zur Verfügung gestellt wird, genügt oftmals nicht den Anforderungen der angeschlossenen Verbraucher, beispielsweise bezüglich der Wasserhärte oder auch der Belastung mit Partikeln. Zur Aufbereitung des Wassers können Wasserbehandlungsgeräte verschiedener Art, etwa Enthärtungsgeräte oder Wasserfilter, eingesetzt werden.

Wasserbehandlungsgeräte sind für eine bestimmte maximale Durchflussleistung ausgelegt. Bei großem Wasserbedarf können daher einzelne Wasserbehandlungsgeräte überfordert werden.

Aus der DE 20 2007 001 107 U1 ist ein Wasserverteiler zum modularen Aufbau einer Wasserbehandlungsanlage bekannt geworden. Der Wasserverteiler umfasst einen Zulaufkanal in einem ersten Rohr und einen Ablaufkanal in einem zweiten Rohr, wobei die Rohre gerade verlaufen und übereinander angeordnet sind. Einlass und Auslass sind an gegenüberliegenden Enden des Wasserverteilers angeordnet. Über Anschlusszwischenstücke können mehrere Wasserbehandlungsgeräte mit den Kanälen verbunden werden.

Dieser bekannte Wasserverteiler weist eine geringe Einbautiefe auf, ist jedoch in eine gerade verlaufende Rohrleitung, wie sie typischerweise in Gebäuden vorliegt, nur schwierig einzubauen, da Einlass und Auslass auf unterschiedlichen Höhen liegen.

Die DE 30 38 460 A1 beschreibt einen kombinierten Vorlaufverteiler und Rücklaufsammler, insbesondere für eine Warmwasser-Fußbodenheizung. Diese Vorrichtung ist modular aufgebaut mit zwei Endkappen und einem oder mehreren dazwischen dichtend angebrachten Mittelstücken, wobei eine innenliegende Vorlaufkammer ringförmig von einer Rücklaufkammer umgeben ist. An einem Mittelstück mündet jeweils ein Gewinde-Rohrstutzen in die Vorlaufkammer und in die Rücklaufkammer. Einlass und Auslass sind ebenfalls als Gewinde-Rohrstutzen an derselben Endkappe ausgebildet und rechtwinklig zueinander orientiert.

Zwar sind bei dieser Vorrichtung Einlass und Auslass auf gleicher Höhe, jedoch sind die gewinkelte Orientierung von deren Gewinde-Rohrstutzen sowie die sackrohrartige Ausbildung von Vorlaufkammer und Rücklaufkammer für einen Einbau in eine gerade Rohrleitung ebenfalls ungünstig.

### Aufgabe der Erfindung

Es ist die Aufgabe der vorliegenden Erfindung, eine Wasseranschlussanordnung vorzustellen, mit welcher auf einfache Weise die Zahl von angeschlossenen Wasserbehandlungsgeräten individuell unterschiedlichen Anforderungen angepasst werden kann, insbesondere wobei eine Wasserbehandlung auch bei großem Wasserbedarf erfolgen kann, und welche auf einfache Weise und platzsparend in eine gerade Rohrleitung eingebaut werden kann.

### Kurze Beschreibung der Erfindung

Diese Aufgabe wird auf überraschend einfache, aber wirkungsvolle Art durch eine Wasseranschlussanordnung der eingangs genannten Art gelöst, die dadurch gekennzeichnet ist, dass der erste Kanal und der zweite Kanal zumindest abschnittsweise in einem gemeinsamen Rohr des Verteilsammlers ausgebildet sind, dass der Verteilsammler modular aufgebaut ist mit
- einem ersten Endstück,
- einem zweiten Endstück,
- einem oder mehreren Mittelstücken, wobei jedes Mittelstück einen Abschnitt des ersten Kanals mit wenigsten einem Wasserabnehmeranschluss und einen Abschnitt des zweiten Kanals mit wenigstens einem Wasserabnehmeranschluss ausbildet,
dass das erste Endstück, das eine oder die mehreren Mittelstücke und das zweite Endstück dichtend miteinander verbunden sind, dass der erste Versorgungsanschluss koaxial zum zweiten Versorgungsanschluss ausgerichtet ist, wobei am ersten Endstück der erste Versorgungsanschluss ausgebildet ist und am zweiten Endstück der zweite Versorgungsanschluss ausgebildet ist,
dass der Abschnitt des ersten Kanals desjenigen Mittelstücks, welches mit dem zweiten Endstück dichtend verbunden ist, auf der Seite des zweiten Endstücks mit einem ersten Dichtelement verschlossen ist,
und dass der Abschnitt des zweiten Kanals desjenigen Mittelstücks, welches mit dem ersten Endstück dichtend verbunden ist, auf der Seite des ersten Endstücks mit einem zweiten Dichtelement verschlossen ist.

Wenn eine gerade verlaufende Rohrleitung für den Einbau einer Wasseranschlussanordnung aufgetrennt wird, liegen sich die Rohrleitungsenden koaxial ausgerichtet gegenüber. Durch die erfindungsgemäße koaxiale Ausrichtung der beiden einander gegenüberliegenden Versorgungsanschlüsse der erfindungsgemäßen Wasseranschlussanordnung sind die Versorgungsanschlüsse korrekt bezüglich der Rohrleitungsenden ausgerichtet. Es sind insbesondere keine gebogenen Zwischenrohrstücke zur Umlenkung des Wasserflusses zu rechtwinklig orientierten Anschlüssen oder zur Überbrückung einer Höhendifferenz nötig. Die Länge der Lücke in der aufgetrennten Rohrleitung kann entsprechend der Länge der einzubauenden Wasseranschlussanordnung gewählt werden, so dass auch diesbezüglich keine Zwischenrohrstücke nötig sind; der Einbau eines geraden Zwischenrohrstücks wäre jedoch ebenfalls ohne nennenswerten Aufwand möglich. Der Einbau der erfindungsgemäßen Anschlusseinrichtung ist somit besonders einfach und entsprechend auch kostengünstig. Durch die Vermeidung von gebogenen Zwischenrohrstücken kann außerdem die Montage platzsparend erfolgen.

Die Rohrleitungsenden (etwa deren Flasche oder Gewindestutzen), zwischen die die Wasseranschlusseinrichtung eingebaut wird, weisen typischerweise einen kreisförmigem Querschnitt auf. Die beiden Versorgungsanschlüsse der erfindungsgemäßen Wasseranschlussanordnung weisen typischerweise jeweils eine entsprechende kreisrunde Anschlussöffnung auf, deren zentrale Achsen (senkrecht zur Öffnungsebene) zueinander koaxial sind. Es sind allerdings auch andere Öffnungsformen, beispielsweise näherungsweise quadratische Öffnungen der Versorgungsanschlüsse möglich, wobei auch in diesem Fall die zentralen Achsen (senkrecht zur Öffnungsebene) koaxial verlaufen.

Der erste Kanal und der zweite Kanal sind im Inneren des gemeinsamen Rohres (wo sie parallel verlaufen) typischerweise gegeneinander abgedichtet; es ist jedoch auch ein integrierter Bypass (bevorzugt mit einem Ventil öffenbar und verschließbar, besonders bevorzugt mit einem gesteuert einstellbaren Öffnungsquerschnitt) denkbar. Typischerweise ist der Verteilsammler so aufgebaut, dass das gemeinsame Rohr, in welchem die beiden Kanäle ausgebildet sind, zumindest teilweise einen der Kanäle (meist den zweiten Kanal, siehe unten) begrenzt.

Die Wasserbehandlungsgeräte können beispielsweise Wasserfilter, Kalkschutzanlagen (insbesondere Enthärtungsanlagen) oder Dosiergeräte sein. Typischerweise sind wenigstens zwei der Wasserbehandlungsgeräte gleichartig (d.h. sie dienen dem gleichen Behandlungszweck) oder (bevorzugt) sogar baugleich. Ein Kanal dient für alle Wasserbehandlungsgeräte als Vorlaufverteiler, und ein Kanal dient für alle Wasserbehandlungsgeräte als Rücklaufsammler.

Die Anordnung von mehreren kleinen, parallel angeschlossenen Wasserbehandlungsgeräten im Vergleich zu einem einzelnen Wasserbehandlungsgerät mit einer großen Behandlungseinheit ermöglicht es, einzelne Geräte vom Netz zu nehmen (etwa für Wartung, Reparatur, Desinfektion, Regeneration), ohne dass die Wasserversorgung unterbrochen werden muss; bei ausreichend großer Anzahl von gleichartigen Wasserbehandlungsgeräten (ab etwa vier) steht dabei auch annähernd volle Behandlungsleistung zur Verfügung. Insbesondere ist ein stagnationsfreier Betrieb der Wasserbehandlungsgeräte möglich; die Geräte gehen für eine Regeneration oder dergleichen kurz vom Netz und anschließend sofort wieder in Betriebsstellung (ggf. zunächst mit verringertem Durchfluss); dies trägt ebenfalls zu einer quasi stets vollen zur Verfügung stehenden Behandlungsleistung bei. Kleinere Wasserbehandlungsgeräte sind zudem einfacher zu transportieren und zu handhaben, aber auch zu desinfizieren.

Durch den modularen Aufbau kann die Anlagengröße (insbesondere die Anzahl der angeschlossenen Wasserbehandlungsgeräte) individuell an unterschiedliche Anforderungen angepasst werden. Die bevorzugt jeweils gleich ausgebildeten Mittelstücke enthalten typischerweise jeweils einen durchgehenden Abschnitt des ersten und des zweiten Kanals, während die Endstücke jeweils nur einen durchgehenden Abschnitt eines der Kanäle zum jeweiligen Versorgungsanschluss führen; der andere Kanal ist im Endstück entweder gar nicht ausgebildet oder wird mit einem kappenartigen Abschnitt abgeschlossen. Die Endstücke enthalten typischerweise keine Wasserabnehmeranschlüsse.

Mit dem ersten Dichtelement ist auf einfache Weise eine Abdichtung zwischen dem ersten und dem zweiten Kanal möglich. Das erste Dichtelement ist typischerweise stopfenförmig ausgebildet.

Mit dem zweiten Dichtelement ist auf einfache Weise eine Abdichtung zwischen dem ersten und dem zweiten Kanal möglich. Das zweite Dichtelement ist typischerweise ringförmig ausgebildet.

### Bevorzugte Ausführungsformen der Erfindung

Besonders bevorzugt ist eine Ausführungsform, bei der der erste Kanal als ein Zentralkanal und der zweite Kanal als ein den Zentralkanal umgebender Ringkanal ausgebildet ist. Wenn die beiden Kanäle ineinander angeordnet sind, so ist eine koaxiale Ausbildung der beiden Versorgungsanschlüsse besonders einfach zu realisieren, insbesondere mit nur geringer Wasserumlenkung in der Wasseranschlussanordnung im Bereich der Versorgungsanschlüsse. Der Zentralkanal (erste Kanal) wird in dieser Ausführungsform durch ein im gemeinsamen Rohr angeordnetes Hilfsrohr begrenzt. Meist ist auch vorgesehen, dass der Zentralkanal, der Ringkanal, der erste Versorgungsanschluss und der zweite Versorgungsanschluss alle koaxial zueinander ausgerichtet sind, wodurch sich der Gesamtaufbau vereinfacht. Zentralkanal und Ringkanal sind typischerweise kreisrund ausgebildet; es sind jedoch auch andere Querschnittsformen möglich, beispielsweise näherungsweise quadratisch. Alternativ ist es auch möglich, das gemeinsame Rohr mit einer Trennwand in Längsrichtung zu halbieren, um den ersten und den zweiten Kanal im gemeinsamen Rohr auszubilden. Im Allgemeinen ist es bevorzugt, wenn das gemeinsame Rohr, der erste Versorgungsanschluss und der zweite Versorgungsanschluss koaxial zueinander ausgerichtet sind. Man beachte, dass die Zuweisung von Zulaufkanalfunktion und Ablaufkanalfunktion zum Zentralkanal und Ringkanal grundsätzlich beliebig erfolgen kann.

Besonders bevorzugt ist eine Ausführungsform, bei der der Verteilsammler eine oder mehrere Messeinrichtungen zur Steuerung der Wasserbehandlungsgeräte aufweist, insbesondere wobei die eine oder die mehreren Messeinrichtungen dazu ausgebildet sind, eine Wasserqualität im Verteilsammler und/oder eine Wassertemperatur im Verteilsammler und/oder eine durch den Verteilsammler fließende Wassermenge zu erfassen. Durch den Einbau der Messeinrichtung(en) in den Verteilsammler wird wiederum Platz gespart; durch gemeinsame Nutzung der Messeinrichtung(en) durch mehrere Wasserbehandlungsgeräte ist eine weitere Platz- und Kostenersparnis möglich.

Besonders bevorzugt ist eine Ausführungsform, bei der das erste Dichtelement und das zweite Dichtelement aus Gummi ausgebildet sind.

Eine vorteilhafte Weiterbildung sieht vor, dass wenigstens eine Messeinrichtung im ersten Endstück und/oder zweiten Endstück angeordnet ist. Dadurch ist es besonders einfach, auf vollständig unbehandeltes Wasser (im eingangsseitigen Endstück) und auf vollständig behandeltes Wasser (im ausgangsseitigen Endstück) zu Kontrollzwecken zuzugreifen.

Bei einer besonders bevorzugten Weiterbildung ist vorgesehen, dass der Abschnitt des ersten Kanals desjenigen Mittelstücks, welches mit dem zweiten Endstück dichtend verbunden ist, auf der Seite des zweiten Endstücks mit einem ersten Dichtelement verschlossen ist, wobei das erste Dichtelement zwischen diesem Mittelstück und dem zweiten Endstück eingeklemmt ist. Wenn das Dichtelement nicht nur anliegt, sondern in seiner dichtenden Position mit ausreichender Kraft eingeklemmt gehalten ist, kann das Dichtelement auch gegen den Wasserdruck (insbesondere bei noch nicht vollständig befülltem Verteilsammler oder merklichem Druckabfall durch die Wasserbehandlung) abdichten.

Gleichfalls besonders bevorzugt ist eine Weiterbildung, bei der der Abschnitt des zweiten Kanals desjenigen Mittelstücks, welches mit dem ersten Endstück dichtend verbunden ist, auf der Seite des ersten Endstücks mit einem zweiten Dichtelement verschlossen ist, wobei das zweite Dichtelement zwischen diesem Mittelstück und dem ersten Endstück eingeklemmt ist. Wenn das Dichtelement nicht nur anliegt, sondern in seiner dichtenden Position mit ausreichender Kraft eingeklemmt gehalten ist, kann das Dichtelement auch gegen den Wasserdruck (insbesondere bei noch nicht vollständig befülltem Verteilsammler oder merklichem Druckabfall durch die Wasserbehandlung) abdichten.

Vorteilhaft ist auch eine Weiterbildung, bei der wenigstens ein Mittelstück auf einer ersten Seite einen Wasserabnehmeranschluss zum ersten Kanal und einen Wasserabnehmeranschluss zum zweiten Kanal aufweist, und ebenso auf einer zweiten, der ersten gegenüberliegenden Seite einen Wasserabnehmeranschluss zum ersten Kanal und einen Wasserabnehmeranschluss zum zweiten Kanal aufweist. Dieser Aufbau gestattet es, eine große Anzahl von Wasserbehandlungsgeräten auf kompaktem Raum zu betreiben.

Vorteilhaft ist weiterhin eine Ausführungsform, bei der der Verteilsammler eine Absperrvorrichtung zur Sperrung des Wasserflusses zwischen dem erstem Versorgungsanschluss und dem zweitem Versorgungsanschluss aufweist. Mit einer eingangsseitigen Absperrvorrichtung kann für Wartungs-, Reparatur und/oder Desinfektionsarbeiten an der Wasseranschlussanordnung die Wasserzufuhr unterbrochen werden. Mit einer ausgangsseitigen Absperrvorrichtung kann die Wasserversorgung der nachfolgenden Installation unterbrochen werden. Es können auch zwei Absperrvorrichtungen, typischerweise direkt hinter den beiden Versorgungsanschlüssen (etwa in den Endstücken) vorgesehen sein.

Besonders bevorzugt ist eine Ausführungsform, bei der die Wasseranschlussanordnung einen Bypass umfasst, welcher den ersten Kanal mit dem zweiten Kanal verbindet, wobei der Bypass ein Bypassventil aufweist, mit dem ein Wasserfluss durch den Bypass zwischen dem ersten Kanal und dem zweiten Kanal eingestellt werden kann. Im einfachsten Fall gestattet das Bypassventil nur ein Absperren oder Öffnen; bevorzugt ist jedoch auch eine quantitative Regelung des Wasserflusses zwischen erstem und zweitem Kanal möglich. Ein Bypass ermöglicht eine Wasserversorgung der nachfolgenden Installation, selbst wenn alle Wasserbehandlungsgeräte vom Netz genommen werden. Dies kann beispielsweise bei Wartungs-, Reparatur- und/oder Desinfektionsarbeiten notwendig sein. In diesen (in der Regel kurzen) Phasen steht dann wenigstens unbehandeltes Wasser zu Verfügung. Im Normalbetrieb kann ein Ventil den Bypass verschließen. Weiterhin kann über einen Bypass bei zu hohen Volumenströmen Wasser abfließen. Hierzu öffnet ein im Bypass integriertes Überströmventil. Schließlich kann ein Bypass auch zum definierten Mischen von behandeltem und unbehandeltem Wasser dienen (Verschneidung). Oftmals wird nur teilbehandeltes, insbesondere teilenthärtetes Wasser benötigt. So wird in Trinkwasserinstallationen eine Mindestresthärte von etwa 3°dH gefordert. Ein Verschneideventil im Bypass regelt die Menge an unbehandeltem Wasser, die dem behandelten Wasser zugemischt wird.

Vorteilhaft ist eine Weiterbildung dieser Ausführungsform, bei der der Bypass einen Wasserabnehmeranschluss des ersten Kanals und einen Wasserabnehmeranschluss des zweiten Kanals direkt miteinander verbindet. Wasser kann hier zwischen den Wasserabnehmeranschlüssen ohne eine Durchleitung durch ein Wasserbehandlungsgerät mit Bypassfunktion fließen, was besonders einfach ist. Der Bypass kann zudem über vorhandene Anschlüsse realisiert werden.

Besonders vorteilhaft ist eine Ausführungsform, bei der in den Wasserabnehmeranschlüssen des Verteilsammlers Absperrvorrichtungen vorgesehen sind. Dadurch können einzelne Wasserbehandlungsgeräte schnell und einfach vom Netz genommen werden und bei Bedarf auch demontiert werden, etwa für Wartung, Reparatur oder Desinfektion.

Ebenso vorteilhaft ist eine Ausführungsform, bei der die Wasserbehandlungsgeräte Ventile zum Absperren des Wasserflusses vom Verteilsammler und zum Verteilsammler aufweisen. Mit den Ventilen können einzelne Wasserbehandlungsgeräte (bzw. deren Behandlungsfunktion) schnell und einfach vom Netz genommen werden; in dieser Variante ist der Verteilsammler besonders einfach aufgebaut.

Vorteilhaft ist auch eine Ausführungsform, bei der zwischen den Wasserabnehmeranschlüssen und den Wasserbehandlungsgeräten jeweils Ventilbauteile zum Absperren des Wasserflusses vom Verteilsammler zum Wasserbehandlungsgerät und vom Wasserbehandlungsgerät zum Verteilsammler angeordnet sind. Die Ventilbauteile sind jeweils mit einem Wasserbehandlungsgerät und einem Wasserabnehmeranschluss verbunden, jedoch von beiden separierbar. Die Ventilbauteile gestatten es ebenfalls, einzelne Wasserbehandlungsgeräte schnell und einfach vom Netz zu nehmen und bei Bedarf auch zu demontieren. Der Verteilsammler kann im Aufbau einfach gehalten werden.

Bei einer besonders vorteilhaften Ausführungsform sind die Wasserbehandlungsgeräte jeweils derart mit den Wasserabnehmeranschlüssen verbunden, dass die Position der Wasserbehandlungsgeräte höhenverstellbar ist. Durch die örtliche Hausinstallation, in die der Verteilsammler eingebaut ist, ist die Position des Verteilsammlers fest. Durch die höhenverstellbaren Wasserbehandlungsgeräte (wobei die Höhenverstellung typischerweise über die Anbindung an die Wasserabnehmeranschlüsse realisiert wird) kann die Position der Wasserbehandlungsgeräte an die örtlichen Gegebenheiten angepasst werden, insbesondere um die Wasserbehandlungsgeräte auf dem Boden aufzustellen; eine zusätzliche Fixierung oder Abstützung der oftmals recht schweren Wasserbehandlungsgeräte entfällt dann.

Bevorzugt ist eine Weiterbildung dieser Ausführungsform, bei der die Wasserbehandlungsgeräte jeweils mittels zweier S-förmiger Rohre mit den Wasserabnehmeranschlüssen des Verteilsammlers dichtend verbunden sind, wobei die S-förmigen Rohre jeweils an ihren beiden Enden drehbar relativ zum Wasserbehandlungsgerät und relativ zum Wasserabnehmeranschluss gelagert sind. Dieser Aufbau mit S-förmigen Rohren ist ähnlich flexibel wie ein Aufbau mit Schlauchanschlüssen, jedoch deutlich stabiler. Wasserbehandlungsgeräte brauchen nicht zusätzlich fixiert zu werden. Außerdem sind Rohrverbindungen hygienischer als Schlauchanschlüsse. Die Drehachsen der insgesamt vier Enden der zwei S-Förmigen Rohre je verbundenem Wasserbehandlungsgerät sind typischerweise parallel. Die Drehachsen sind typischerweise weiterhin senkrecht zu den Öffnungen der Wasserabnehmeranschlüsse. Die beiden Wasserabnehmeranschlüsse für ein Wasserbehandlungsgerät sind typischerweise nebeneinander angeordnet.

Besonders bevorzugt ist auch eine Ausführungsform, die vorsieht, dass der erste und der zweite Versorgungsanschluss jeweils mit einem Flanschanschluss ausgebildet sind, der eine kreisrunde Anschlussöffnung aufweist. Flaschanschlüsse haben sich in der Praxis bewährt und gestatten eine einfache und sichere, dichte Verbindung. Alternativ sind auch Gewindeanschlüsse denkbar, typischerweise ebenfalls mit kreisrunden Anschlussöffnungen für den Wasserfluss.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig.1 1: eine schematische, teilweise geschnittene Schrägansicht einer ersten Ausführungsform einer erfindungsgemäßen Wasseranschlussanordnung, mit Zentralkanal und Ringkanal und vier angeschlossenen Wasserbehandlungsgeräten;
- Fig. 2: die Wasseranschlussanordnung von Fig. 1, mit einem Wasserbehandlungsgerät in Serviceposition;
- Fig. 3: eine teilweise geschnittene Detailansicht der Verschneideeinrichtung der Wasseranschlussanordnung von Fig. 1;
- Fig. 4: die Wasseranschlussanordnung von Fig. 1, nach einer Höhenverstellung eines Wasserbehandlungsgeräts;
- Fig. 5: eine geschnittene Detailansicht der Wasseranschlussanordnung von Fig. 1, im Bereich des einlassseitigen Versorgungsanschlusses;
- Fig. 6: eine geschnittene Detailansicht der Wasseranschlussanordnung von Fig. 1, im Bereich des auslassseitigen Versorgungsanschlusses;
- Fig. 7a: einen schematischen Längsschnitt durch eine zweite Ausführungsform einer erfindungsgemäßen Wasseranschlussanaordnung, mit näherungsweise hälftig geteiltem gemeinsamen Rohr und drei Wasserbehandlungsgeräten;
- Fig. 7b: einen Querschnitt durch den Verteilsammler der Wasseranschlussanordnung von Fig. 7a;
- Fig. 7c: einen Querschnitt durch den Verteilsammler einer dritten Ausführungsform einer erfindungsgemäßen Wasseranschlussanordnung, mit näherungsweise quadratisch geformtem gemeinsamen Rohr.

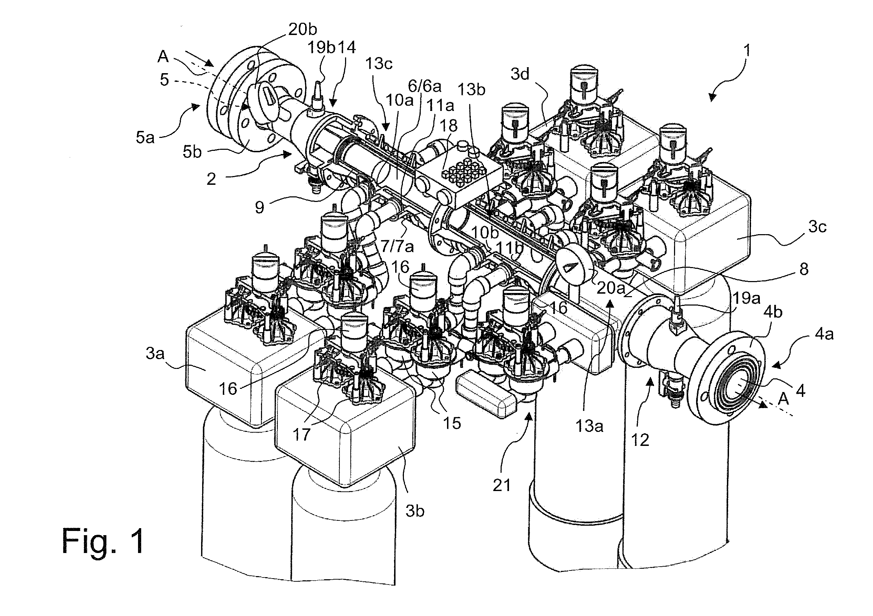

Die **Figur 1** zeigt eine erste Ausführungsform einer erfindungsgemäßen Wasseranschlussanordnung 1, umfassend einen Verteilsammler 2 sowie hier vier Wasserbehandlungsgeräte 3a-3d (hier jeweils Enthärtungsgeräte mit lonentauschern) sowie einer Verschneideeinrichtung 21.

Der Verteilsammler 2 ist mit einem ersten Versorgungsanschluss 4, hier einem Auslass (Ablauf) 4a, und mit einem zweiten Versorgungsanschluss 5, hier einem Einlass (Zulauf) 5a, mit einer örtlichen Wasserinstallation verbunden. Der Verteilsammler 2 ist im Wesentlichen gerade aufgebaut, so dass die ablauf- und zulaufseitigen Flansche 4b, 5b koaxial ausgerichtet sind, vgl. die gemeinsame Achse A, die durch die Zentren beider Flansche 4b, 5b verläuft.

Im Verteilsammler 2 sind ein erster Kanal 6, der im Wesentlichen (d.h. mit Ausnahme der Endbereiche des Verteilsammlers 2) als gerade verlaufender Zentralkanal 6a ausgebildet ist, und ein zweiter Kanal 7, der im Wesentlichen (d.h. bis auf die Endbereiche des Verteilsammlers 2) als gerade verlaufender Ringkanal 7a ausgebildet ist. Der Auslass 4a ist direkt mit dem Zentralkanal 6a verbunden, so dass der Zentralkanal 6a als Auslasskanal oder Wassersammler dient. Der Einlass 5a ist direkt mit dem Ringkanal 7a verbunden, so dass der Ringkanal 7a als Einlasskanal oder Wasserverteiler dient. Zentralkanal 6a und Ringkanal 7a sind in der gezeigten Ausführungsform innerhalb des Verteilsammlers 2 vollständig gegeneinander abgedichtet. Die äußere Begrenzung des Ringkanals 7a kann als ein gemeinsames Rohr 8 bezeichnet werden, in welchem sowohl der erste Kanal 6 als auch der zweite Kanal 7 verlaufen. Die äußere Begrenzung des Zentralkanals 6a wird durch ein Hilfsrohr 9 gebildet, welches im gemeinsamen Rohr 8 enthalten ist (Rohr in Rohr-Technik). Das gemeinsame Rohr 8 und das Hilfsrohr 9 bzw. der Zentralkanal 6a und der Ringkanal 7a verlaufen ebenfalls koaxial bezüglich der oben erwähnten Achse A.

Am Verteilsammler 2 sind mehrere Paare (hier fünf) von Wasserabnehmeranschlüssen 10a-10b, 11 a-11 b zum ersten und zweiten Kanal 6, 7 vorgesehen. Über vier der Paare ist jeweils ein Wasserbehandlungsgerät 3a-3d angeschlossen, wobei die Wasserbehandlungsgeräte 3a-3d auf zwei gegenüberliegenden Seiten des Verteilsammlers 2 montiert sind. Das Wasserbehandlungsgerät 3b ist beispielsweise über den Wasserabnehmeranschluss 10b mit dem Zentralkanal 6a und über den Wasserabnehmeranschluss 11 b mit dem Ringkanal 7a verbunden. Dadurch kann das Wasserbehandlungsgerät 3b unbehandeltes Wasser aus dem Ringkanal 7a entnehmen, behandeln und in den Zentralkanal 6a einspeisen.

Der Verteilsammler 2 ist in der gezeigten Ausführungsform modular aufgebaut und umfasst ein erstes Endstück 12, in welchem der erste Versorgungsanschluss 4 ausgebildet ist, weiterhin (hier) drei Mittelstücke 13a-13c, und ein zweites Endstück 14, in welchem der zweite Versorgungsanschluss 5 ausgebildet ist. Die Wasserabnehmeranschlüsse 10a-10b, 11 a-11 b sind in Mittelstücken 13a-13c ausgebildet; jedes Mittelstück 13a-13c bildet jeweils einen Abschnitt von Zentralkanal 6a und Ringkanal 7a aus. Benachbarte Endstücke 12, 14 und Mittelstücke 13a-13c sind über Flansche dichtend miteinander verbunden. Falls erforderlich (etwa zum Ausgleich der Länge des Verteilsammlers 2) können auch ein oder mehrere Hilfsstücke vorgesehen sein, die zwischen zwei Mittelstücken oder zwischen einem Mittelstück 13a-13c und einem Endstück 12, 14 eingesetzt werden, und typischerweise weder Wasserabnehmeranschlüsse noch Versorgungsanschlüsse ausbilden.

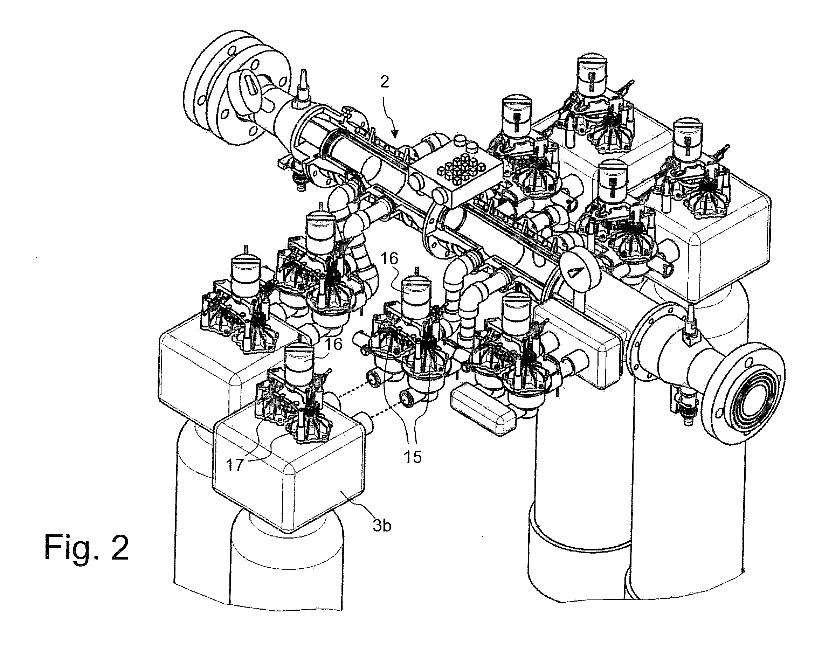

Die Wasserbehandlungsgeräte 3a-3d sind parallel zueinander angeschlossen, wodurch grundsätzlich alle Wasserbehandlungsgeräte 3a-3d für eine optimale (insbesondere für große Wasserentnahmen taugliche) Behandlungswirkung zur Verfügung stehen. Falls ein Wasserbehandlungsgerät 3a-3d gewartet werden muss, können in dieser Zeit die anderen Wasserbehandlungsgeräte 3a-3d die Wasserbehandlung unterbrechungsfrei fortsetzen. Zur Wartung eines Wasserbehandlungsgeräts, etwa des Wasserbehandlungsgeräts 3b, wird der Wasserfluss zu und von diesem mittels zweier Ventilbauteile (Hauptventile) 15, die über einen Stellmotor 16 motorisch angesteuert werden können, unterbrochen. Sodann kann das Wasserbehandlungsgerät 3b abgenommen werden, vgl. **Figur 2****,** welche eine abgetrennte Serviceposition des Wasserbehandlungsgeräts 3b zeigt; die Ventilbauteile 15 bleiben dabei mit dem Verteilsammler 2 verbunden. Nach Abschluss der Wartung kann das Wasserbehandlungsgerät 3b wieder installiert und nach Öffnen der Ventilbauteile 15 wieder in Betrieb genommen werden. Für eine Regeneration eines Wasserbehandlungsgeräts 3a-3d (hier eines lonentauschers) braucht das Wasserbehandlungsgerät 3a-3d nicht abgenommen zu werden; hierfür genügt in der Regel eine Flussunterbrechung über die Ventilbauteile 15 sowie die Schaltung einer Regeneration über die Regenerationsventile 17, die ebenfalls über einen Stellmotor 16 motorisch angesteuert werden können.

Wie wiederum aus der Figur 1 ersichtlich ist, verfügt die Wasseranschlussanordnung weiterhin über eine elektronische Steuereinheit 18. Diese wertet Informationen von zwei Messeinrichtungen 19a, 19b (etwa eine ionenselektive Elektrode und ein Leitfähigkeitssensor) im ersten Endstück 12 und im zweiten Endstück 14 im behandelten und unbehandelten Wasser zur Bestimmung der Wasserqualität (etwa der Wasserhärte) aus. Ebenso stehen der Steuereinheit 18 die Daten von Durchflussmessern 20a, 20b in einer Verschneideeinrichtung 21 (entsprechend einem unbehandeltem Teilstrom) und im zweiten Endstück 14 (entsprechend dem gesamten Wasserstrom) zur Verfügung; die Durchflussmesser können ebenfalls als Messeinrichtungen bezeichnet werden. Damit kann die Steuereinheit 18 die Erschöpfung der Wasserbehandlungsgeräte 3a-3d mitverfolgen und deren Regeneration steuern bzw. zur Vermeidung von Behandlungslücken koordinieren, und auch eine Verschneidung in der Verschneideeinrichtung 21 steuern.

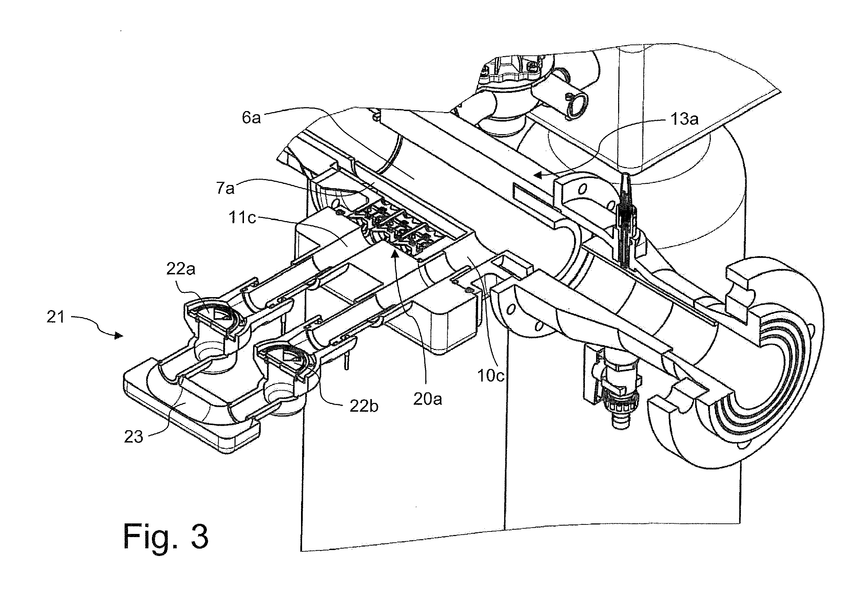

Die **Figur 3** illustriert die Verschneideeinrichtung 21 näher; die Verschneideeinrichtung 21 ist am Mittelstück 13a bzw. deren Wasserabnehmeranschlüssen 10c, 11 c angeschlossen. Wasser aus dem Ringkanal 7a kann über die Turbine des Durchflussmessers 20a (bzw. den Wasserabnehmeranschluss 11 c) über ein erstes Bypassventil 22a, über einen Bypass 23 und über ein zweites Bypassventil 22b unbehandelt in den Zentralkanal 6a (bzw. in den Wasserabnehmeranschluss 10c) geleitet werden. Die Bypassventile 22a, 22b sind von der Steuereinheit 18 über einen Stellmotor 16 (siehe Fig. 1) ansteuerbar. Die Steuereinheit 18 gestattet es dabei, den Durchfluss durch den Bypass 23 quantitativ so zu regeln, dass die Wasseranschlussanordnung 1 aus dem behandelten Wasser der Wasserbehandlungsgeräte 3a-3d und dem unbehandelten Wasser, welches durch den Bypass 23 fließt, ein Verschnittwasser einer auf einen vorgegebenen (in der Steuereinheit 18 eingestellten bzw. hinterlegten) Sollwert eingeregelten Härte generiert.

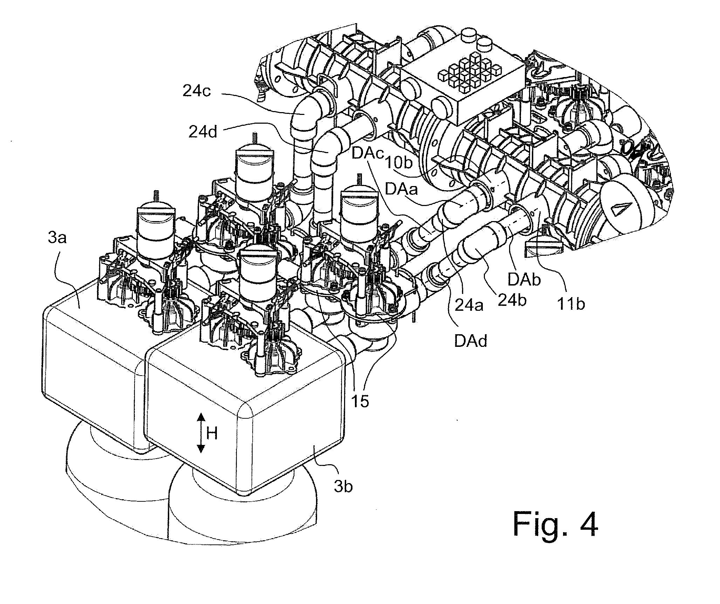

Die **Figur 4** illustriert anhand der in Figur 1 gezeigten Ausführungsform die Höhenverstellung des Wasserbehandlungsgeräts 3b. Das Wasserbehandlungsgerät 3b ist über zwei S-förmige Rohre 24a, 24b an die Wasserabnehmeranschlüsse 10b, 11 b angebunden, wobei die S-förmigen Rohre 24a, 24b dabei drehbar (aber dichtend) in den Wasserabnehmeranschlüssen 10b, 11 b gelagert sind, vgl. Drehachsen DAa, DAb. Anderenends sind die S-förmigen Rohre 24a, 24b ebenfalls drehbar (aber dichtend) an den Ventilbauteilen 15 gelagert, vgl. Drehachsen DAc, DAd. Dadurch ist es möglich, das Wasserbehandlungsgerät 3b (mitsamt der Ventilbauteile 15) näherungsweise um die Drehachsen DAa, DAb zu verschwenken, und dadurch auch die Höhenposition H des Wasserbehandlungsgeräts 3b zu verändern (wobei gleichzeitig auch dessen laterale Position verändert wird). In der Regel wird die Verstellung der Höhenposition H dazu genutzt, das Wasserbehandlungsgerät 3b auf dem Boden aufzustellen bzw. abzustellen. Bei der Ausführungsform von Fig. 1 sind alle vier Wasserbehandlungsgeräte höhenverstellbar gelagert.

In der Situation von Fig. 4 ist das linke Wasserbehandlungsgerät 3a tiefer angeordnet als das rechte.Wasserbehandlungsgerät 3b, weil die S-förmigen Rohre 24c, 24d zum linken Wasserbehandlungsgerät 3a senkrecht nach unten ausgerichtet sind, und die baugleichen S-förmigen Rohre 24a, 24b demgegenüber in einer um ca. 30° verschwenkten Stellung sind.

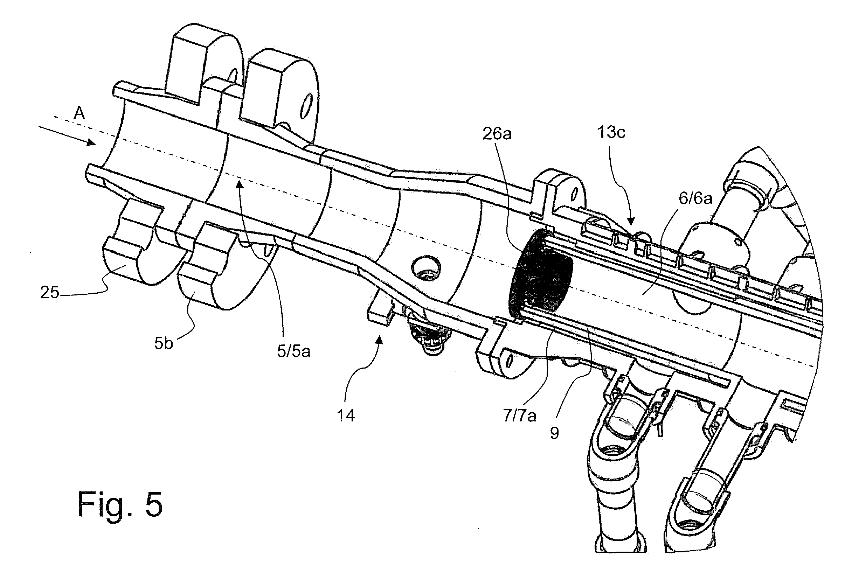

Die **Figur 5** illustriert den Endbereich des zweiten Endstücks 14 bzw. des Einlasses (Zulaufs) 5a näher. Am zulaufseitigen Flansch 5b (an dem hier bereits ein Flansch 25 der anzubindenen Rohrleitung angeschlossen ist) fließt unbehandeltes Wasser zu. Das zulaufende Wasser soll nur in den Ringkanal 7a, nicht aber in den Zentralkanal 6a des Mittelstücks 13c, welches an das zweite Endstück 14 angeflanscht ist, gelangen. Deshalb ist der Zentralkanal 6a mit einem ersten Dichtelement 26a verschlossen. Das erste Dichtelement 26a ist hier stopfenförmig ausgebildet, besteht typischerweise aus Gummi und kann lose auf das Hilfsrohr 9 aufgesteckt werden, da der Wasserdruck des zufließenden Wassers das erste Dichtelement 26a auf das Hilfsrohr 9 drückt (Falls der Wasserfluss umgekehrt gewünscht ist, muss das erste Dichtelement 26a in der dichtenden Position befestigt werden, etwa durch Einklemmen zwischen dem zweiten Endstück 14 und dem benachbarten Mittelstück 13c).

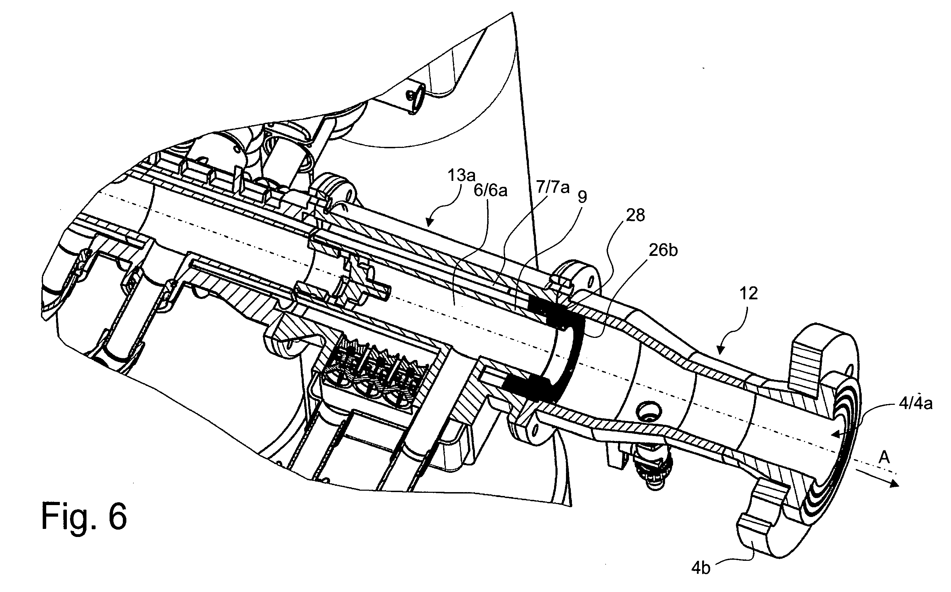

Die **Figur 6** illustriert den Endbereich des ersten Endstücks 12 bzw. des Auslasses (Ablaufs) 4a näher. Am ablaufseitigen Flansch 4b fließt behandeltes oder teilbehandeltes Wasser ab (hier kann ein Flansch einer anzubindenden Rohrleitung angeflanscht werden, nicht dargestellt). Das ablaufende Wasser soll nur aus dem Zentralkanal 6a, nicht aber aus dem Ringkanal 7a des Mittelstücks 13a, welches an das erste Endstück 12 angeflanscht ist, abfließen. Deshalb ist der Ringkanal 7a mit einem zweiten Dichtelement 26b verschlossen. Das zweite Dichtelement 26b ist hier ringförmig ausgebildet, besteht typischerweise aus Gummi und ist zwischen dem Mittelstück 13a (hier insbesondere dem Hilfsrohr 9) und dem ersten Endstück 12 (hier insbesondere an einer umlaufenden Anlegekante 28) eingeklemmt, um auch gegen den höheren Wasserdruck im Ringkanal 7a die Dichtwirkung aufrecht erhalten zu können (Falls der Wasserfluss umgekehrt gewünscht ist, braucht das zweite Dichtelement nur lose aufgesteckt werden, da der Wasserdruck das zweite Dichtelement dann in der dichtenden Position hält).

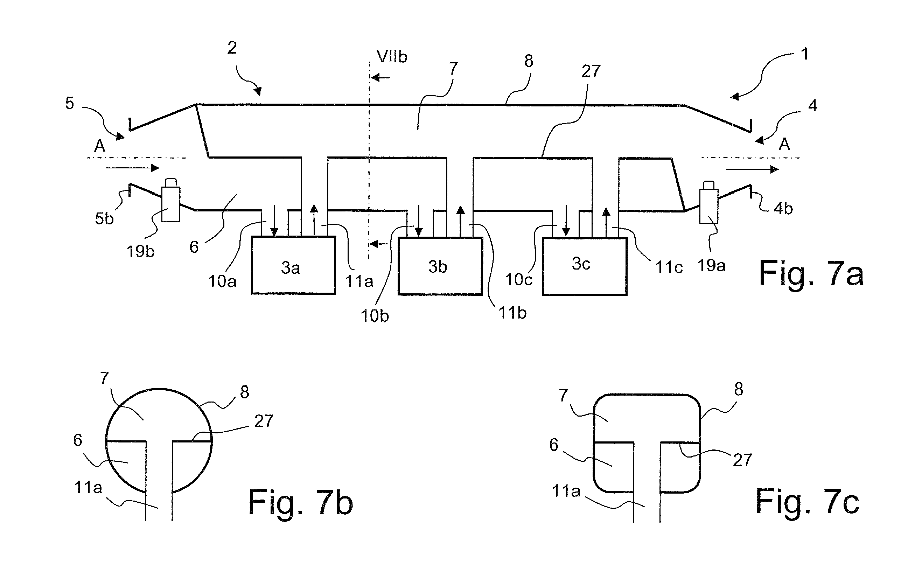

Eine weitere Ausführungsform einer erfindungsgemäßen Wasseranschlussanordnung 1 ist in Figur 7a (im Längsschnitt) und Figur 7b (im Querschnitt bei Ebene Vllb der Fig. 7a) dargestellt; der erfindungsgemäß vorgesehene modulare Aufbau ist hier nicht gesondert dargestellt. Bei dieser Ausführungsform sind ein erster Kanal 6 und ein zweiter Kanal 7 übereinander in einem gemeinsamen, runden Rohr 8 ausgebildet. Das Rohr 8 wird durch eine Trennwand 27 in Längsrichtung näherungsweise halbiert, um die beiden Kanäle 6, 7 voneinander zu trennen. Der erste Kanal 6 dient hierbei als Wasserverteiler, und der zweite Kanal 7 dient als Wassersammler. Wasserbehandlungsgeräte 3a-3c sind an Wasserabnehmeranschlüssen 10a-10c, 11 a-11 c angeschlossen. Die Qualität des behandelten Wassers und des unbehandelten Wassers kann mit Messeinrichtungen 19a, 19b (etwa einer ionenselektiven Elektrode und einem Leitfähigkeitssensor) untersucht werden.

Trotz der gegeneinander geringfügig versetzen Führung der Kanäle 6, 7 im mittleren Teil sind die Versorgungsanschlüsse 4, 5, die hier jeweils mit kreisrunden Flanschen 4b, 5b ausgebildet sind, koaxial zueinander ausgerichtet, vgl. die gemeinsame Achse A. Bezüglich der Achse A sind die beiden (hier'gleich großen) Flansche 4b, 5b rotationssymmetrisch ausgebildet. Zwischen den Flanschen 4b, 5b verläuft der Verteilsammler 2 der Wasseranschlussanordnung 1 im Wesentlichen gerade; insbesondere ist auch das gemeinsame Rohr 8 (bezüglich seiner Außenkontur) koaxial zu den Versorgungsanschlüssen 4, 5.

Man beachte, dass die Wasserabnehmeranschlüsse 10a-10c, 11a-11c nicht nach unten ausgerichtet sein brauchen, sondern beispielsweise auch zur Seite hin ausgerichtet sein können, was die Montage der Wasseranschlussanordnung 1 (und dabei insbesondere der Wasserbehandlungsgeräte 3a, 3b, 3c) vor einer Wand erleichtern kann.

Die **Figur 7c** zeigt für eine gegenüber der Ausführungsform der Wasseranschlussanordnung der Figuren 7a, 7b leicht abgewandelte Ausführungsform einen Querschnitt, etwa wiederum bei Ebene VIIb in Fig. 1. Das Rohr 8 ist hier näherungsweise quadratisch (mit abgerundeten Ecken) ausgebildet, und wird von einer Trennwand 27 in zwei Hälften für die Kanäle 6, 7 unterteilt. Die Kanäle 6, 7 führen in den Endbereichen wiederum zu koaxialen Versorgungsanschlüssen, die typischerweise wiederum mit kreisrunden Flanschen ausgebildet sind (nicht näher dargestellt).

### Bezugszeichenliste

- 1: Wasseranschlussanordnung
- 2: Verteilsammler
- 3a-3d: Wasserbehandlungsgeräte
- 4: erster Versorgungsanschluss
- 4a: Auslass (Ablauf)
- 4b: ablaufseitiger Flansch
- 5: zweiter Versorgungsanschluss
- 5a: Einlass (Zulauf)
- 5b: zulaufseitiger Flansch
- 6: erster Kanal
- 6a: Zentralkanal
- 7: zweiter Kanal
- 7a: Ringkanal
- 8: gemeinsames Rohr
- 9: Hilfsrohr
- 10a-10c: Wasserabnehmeranschlüsse (zum ersten Kanal)
- 11 a-11 c: Wasserabnehmeranschlüsse (zum zweiten Kanal)
- 12: erstes Endstück
- 13a-13c: Mittelstücke
- 14: zweites Endstück
- 15: Ventilbauteile (Hauptventile)
- 16: Stellmotoren für Ventile
- 17: Regenerationsventile
- 18: Steuereinheit
- 19a, 19b: Messeinrichtungen (ionenselektive Elektrode/Leitfähigkeitssensor)
- 20a, 20b: Messeinrichtungen (Durchflussmesser)
- 21: Verschneideeinrichtung
- 22a, 22b: Bypassventile
- 23: Bypass
- 24a-24d: S-förmige Rohre
- 25: Flansch (zulaufseitige Rohrleitung)
- 26a: erstes Dichtelement
- 26b: zweites Dichtelement
- 27: Trennwand
- 28: Anlegekante
- A: Achse
- DAa-DAd: Drehachsen (der Enden der S-förmigen Rohre)

## Patentansprüche

1. Wasseranschlussanordnung (1), umfassend einen kombinierten Wasserverteiler und Wassersammler, im folgenden Verteilsammler (2) genannt, wobei der Verteilsammler (2) aufweist
- einen im Wesentlichen gerade verlaufenden ersten Kanal (6), mit mehreren Wasserabnehmeranschlüssen (10a-10c) zum ersten Kanal (6),
- einen im Wesentlichen gerade verlaufenden zweiten Kanal (7), mit mehreren Wasserabnehmeranschlüssen (11 a-11 c) zum zweiten Kanal (7),
- einen ersten Versorgungsanschluss (4) zum ersten Kanal (6), und
- einen zweiten Versorgungsanschluss (5) zum zweiten Kanal (7),
wobei die beiden Versorgungsanschlüsse (4, 5) an gegenüberliegenden Enden des Verteilsammlers (2) ausgebildet sind,
und wobei die Wasseranschlussanordnung (1) weiterhin mehrere Wasserbehandlungsgeräte (3a-3d) aufweist, die jeweils an einem Wasserabnehmeranschluss (10a-10c) des ersten Kanals (6) und einem Wasserabnehmeranschluss (11 a-11 c) des zweiten Kanals (7) angeschlossen sind,
**dadurch gekennzeichnet,**
**dass** der erste Kanal (6) und der zweite Kanal (7) zumindest abschnittsweise in einem gemeinsamen Rohr (8) des Verteilsammlers (2) ausgebildet sind,
**dass** der Verteilsammler (2) modular aufgebaut ist mit
- einem ersten Endstück (12),
- einem zweiten Endstück (14),
- einem oder mehreren Mittelstücken (13a-13c), wobei jedes Mittelstück (13a-13c) einen Abschnitt des ersten Kanals (6) mit wenigsten einem Wasserabnehmeranschluss (10a-10c) und einen Abschnitt des zweiten Kanals (7) mit wenigstens einem Wasserabnehmeranschluss (11a-11c) ausbildet,
**dass** das erste Endstück (12), das eine oder die mehreren Mittelstücke (13a-13c) und das zweite Endstück (14) dichtend miteinander verbunden sind,
**dass** der erste Versorgungsanschluss (4) koaxial zum zweiten Versorgungsanschluss (5) ausgerichtet ist, wobei am ersten Endstück (12) der erste Versorgungsanschluss (4) ausgebildet ist und am zweiten Endstück (14) der zweite Versorgungsanschluss (5) ausgebildet ist, dass der Abschnitt des ersten Kanals (6) desjenigen Mittelstücks (13c), welches mit dem zweiten Endstück (14) dichtend verbunden ist, auf der Seite des zweiten Endstücks (14) mit einem ersten Dichtelement (26a) verschlossen ist,
und **dass** der Abschnitt des zweiten Kanals (7) desjenigen Mittelstücks (13a), welches mit dem ersten Endstück (12) dichtend verbunden ist, auf der Seite des ersten Endstücks (12) mit einem zweiten Dichtelement (26b) verschlossen ist.

2. Wasseranschlussanordnung (1) nach Anspruch 1, **dadurch gekennzeichnet, dass** der erste Kanal (6) als ein Zentralkanal (6a) und der zweite Kanal (7) als ein den Zentralkanal (6a) umgebender Ringkanal (7a) ausgebildet ist.

3. Wasseranschlussanordnung (1) nach Anspruch 1 oder 2, **dadurch gekennzeichnet, dass** der Verteilsammler (2) eine oder mehrere Messeinrichtungen (19a, 19b, 20a, 20b) zur Steuerung der Wasserbehandlungsgeräte (3a-3d) aufweist,
insbesondere wobei die eine oder die mehreren Messeinrichtungen (19a, 19b, 20a, 20b) dazu ausgebildet sind, eine Wasserqualität im Verteilsammler (2) und/oder eine Wassertemperatur im Verteilsammler (2) und/oder eine durch den Verteilsammler (2) fließende Wassermenge zu erfassen.

4. Wasseranschlussanordnung (1) nach einem der vorhergehenden Ansprüche, **dadurch gekennzeichnet, dass** das erste Dichtelement (26a) und das zweite Dichtelement (26b) aus Gummi ausgebildet sind.

5. Wasseranschlussanordnung (1) nach einem der vorhergehenden Ansprüche, **dadurch gekennzeichnet, dass** wenigstens eine Messeinrichtung (19a, 19b, 20a, 20b) im ersten Endstück (12) und/oder zweiten Endstück (14) angeordnet ist.

6. Wasseranschlussanordnung (1) nach einem der vorhergehenden Ansprüche, **dadurch gekennzeichnet, dass** das erste Dichtelement (26a) zwischen dem Mittelstück (13c), welches mit dem zweiten Endstück (14) dichtend verbunden ist, und dem zweiten Endstück (14) eingeklemmt ist.

7. Wasseranschlussanordnung (1) nach einem der vorhergehenden Ansprüche, **dadurch gekennzeichnet, dass** das zweite Dichtelement (26b) zwischen dem Mittelstück (13a), welches mit dem ersten Endstück (12) dichtend verbunden ist, und dem ersten Endstück (12) eingeklemmt ist.

8. Wasseranschlussanordnung (1) nach einem der vorhergehenden Ansprüche, **dadurch gekennzeichnet, dass** wenigstens ein Mittelstück (13a-13c) auf einer ersten Seite einen Wasserabnehmeranschluss (10a-10c) zum ersten Kanal (6) und einen Wasserabnehmeranschluss (11 a-11 c) zum zweiten Kanal (7) aufweist, und ebenso auf einer zweiten, der ersten gegenüberliegenden Seite einen Wasserabnehmeranschluss (10a-10c) zum ersten Kanal (6) und einen Wasserabnehmeranschluss (11 a-11 c) zum zweiten Kanal (7) aufweist.

9. Wasseranschlussanordnung (1) nach einem der vorhergehenden Ansprüche, **dadurch gekennzeichnet, dass** der Verteilsammler (2) eine Absperrvorrichtung zur Sperrung eines Wasserflusses zwischen dem erstem Versorgungsanschluss (4) und dem zweitem Versorgungsanschluss (5) aufweist.

10. Wasseranschlussanordnung (1) nach einem der vorhergehenden Ansprüche, **dadurch gekennzeichnet, dass** die Wasseranschlussanordnung (1) einen Bypass (23) umfasst, welcher den ersten Kanal (6) mit dem zweiten Kanal (7) verbindet, wobei der Bypass (23) ein Bypassventil (22a, 22b) aufweist, mit dem ein Wasserfluss durch den Bypass (23) zwischen dem ersten Kanal (6) und dem zweiten Kanal (7) eingestellt werden kann.

11. Wasseranschlussanordnung (1) nach Anspruch 10, **dadurch gekennzeichnet, dass** der Bypass (23) einen Wasserabnehmeranschluss (10c) des ersten Kanals (6) und einen Wasserabnehmeranschluss (11c) des zweiten Kanals (7) direkt miteinander verbindet.

12. Wasseranschlussanordnung (1) nach einem der vorhergehenden Ansprüche, **dadurch gekennzeichnet, dass** in den Wasserabnehmeranschlüssen (10a-10c, 11 a-11 c) des Verteilsammlers (2) Absperrvorrichtungen vorgesehen sind.

13. Wasseranschlussanordnung (1) nach einem der vorhergehenden Ansprüche, **dadurch gekennzeichnet, dass** die Wasserbehandlungsgeräte (3a-3d) Ventile zum Absperren des Wasserflusses vom Verteilsammler (2) und zum Verteilsammler (2) aufweisen.

14. Wasseranschlussanordnung (1) nach einem der vorhergehenden Ansprüche, **dadurch gekennzeichnet, dass** zwischen den Wasserabnehmeranschlüssen (10a-10c, 11a-11c) und den Wasserbehandlungsgeräten (3a-3d) jeweils Ventilbauteile (15) zum Absperren des Wasserflusses vom Verteilsammler (2) zum Wasserbehandlungsgerät (3a-3d) und vom Wasserbehandlungsgerät (3a-3d) zum Verteilsammler (2) angeordnet sind.

15. Wasseranschlussanordnung (1) nach einem der vorhergehenden Ansprüche, **dadurch gekennzeichnet, dass** die Wasserbehandlungsgeräte (3a-3d) jeweils derart mit den Wasserabnehmeranschlüssen (10a-10c, 11a-11c) verbunden sind, dass die Position der Wasserbehandlungsgeräte (3a-3d) höhenverstellbar ist.

16. Wasseranschlussanordnung (1) nach einem der vorhergehenden Ansprüche, **dadurch gekennzeichnet, dass** die Wasserbehandlungsgeräte (3a-3d) jeweils mittels zweier S-förmiger Rohre (24a-24d) mit den Wasserabnehmeranschlüssen (10a-10c, 11 a-11 c) des Verteilsammlers (2) dichtend verbunden sind, wobei die S-förmigen Rohre (24a-24d) jeweils an ihren beiden Enden drehbar relativ zum Wasserbehandlungsgerät (3a-3d) und relativ zum Wasserabnehmeranschluss (10a-10c, 11a-11c) gelagert sind.

17. Wasseranschlussanordnung (1) nach einem der vorhergehenden Ansprüche, **dadurch gekennzeichnet, dass** der erste und der zweite Versorgungsanschluss (4, 5) jeweils mit einem Flanschanschluss (4b, 5b) ausgebildet sind, der eine kreisrunde Anschlussöffnung aufweist.

## Claims

1. Water connection arrangement (1), comprising a combined water distributor and water collector, referred to as distributor collector (2) below, the distributor collector (2) comprising
- a first channel (6) which extends substantially in a straight manner and has a plurality of water outlet connections (10a-10c) to the first channel (6),
- a second channel (7) which extends substantially in a straight manner and has a plurality of water outlet connections (11a-11c) to the second channel (7),
- a first supply connection (4) to the first channel (6), and
- a second supply connection (5) to the second channel (7), wherein the two supply connections (4, 5) are formed at opposite ends of the distributor collector (2),
and wherein the water connection arrangement (1) furthermore comprises a plurality of water treatment devices (3a-3d) which are each connected to a water outlet connection (10a-10c) of the first channel (6) and to a water outlet connection (11a-11c) of the second channel (7),
**characterized in that**
the first channel (6) and the second channel (7) are formed, at least in sections, in a common tube (8) of the distributor collector (2), that the distributor collector (2) has a modular structure with
- a first end piece (12),
- a second end piece (14),
- one or a plurality of center pieces (13a-13c), wherein each center piece (13a-13c) forms a section of the first channel (6) with at least one water outlet connection (10a-10c) and a section of the second channel (7) with at least one water outlet connection (11a-11c),
that the first end piece (12), the one or the plurality of center pieces (13a-13c) and the second end piece (14) are sealingly connected to one another,
that the first supply connection (4) is oriented coaxially with respect to the second supply connection (5), wherein the first supply connection (4) is formed on the first end piece (12) and the second supply connection (5) is formed on the second end piece (14), that the section of the first channel (6) of that center piece (13c) which is sealingly connected to the second end piece (14) is sealed on the side of the second end piece (14) by means of a first sealing element (26a),
and that the section of the second channel (7) of that center piece (13a) which is sealing connected to the first end piece (12) is sealed on the side of the first end piece (12) by means of a second sealing element (26b).

2. Water connection arrangement (1) according to claim 1, **characterized in that** the first channel (6) is designed as a central channel (6a) and the second channel (7) is designed as an annular channel (7a) that surrounds the central channel (6a).

3. Water connection arrangement (1) according to claim 1 or 2, **characterized in that** the distributor collector (2) comprises one or more measuring devices (19a, 19b, 20a, 20b) for controlling the water treatment devices (3a-3d), in particular wherein the one or the plurality of measuring devices (19a, 19b, 20a, 20b) are designed to detect a water quality in the distributor collector (2) and/or a water temperature in the distributor collector (2) and/or an amount of water that flows through the distributor collector (2).

4. Water connection arrangement (1) according to any one of the preceding claims, **characterized in that** the first sealing element (26a) and the second sealing element (26b) are formed from rubber.

5. Water connection arrangement (1) according to any one of the preceding claims, **characterized in that** at least one measuring device (19a, 19b, 20a, 20b) is arranged in the first end piece (12) and/or second end piece (14).

6. Water connection arrangement (1) according to any one of the preceding claims, **characterized in that** the first sealing element (26a) is clamped between the center piece (13c), which is sealingly connected to the second end piece (14), and the second end piece (14).

7. Water connection arrangement (1) according to any one of the preceding claims, **characterized in that** the second sealing element (26b) is clamped between the center piece (13a), which is sealingly connected to the first end piece (12), and the first end piece (12).

8. Water connection arrangement (1) according to any one of the preceding claims, **characterized in that** at least one center piece (13a-13c) comprises on a first side a water outlet connection (10a-10c) to the first channel (6) and a water outlet connection (11a-11c) to the second channel (7), and also comprises on a second side opposite to the first side, a water outlet connection (10a-10c) to the first channel (6) and a water outlet connection (11a-11c) to the second channel (7).

9. Water connection arrangement (1) according to any one of the preceding claims, **characterized in that** the distributor collector (2) comprises a shut-off device for shutting off a water flow between the first supply connection (4) and the second supply connection (5).

10. Water connection arrangement (1) according to any one of the preceding claims, **characterized in that** the water connection arrangement (1) comprises a bypass (23) which connects the first channel (6) to the second channel (7), wherein the bypass (23) comprises a bypass valve (22a, 22b) by means of which a water flow through the bypass (23) between the first channel (6) and the second channel (7) can be adjusted.

11. Water connection arrangement (1) according to claim 10, **characterized in that** the bypass (23) directly connects a water outlet connection (10c) of the first channel (6) to a water outlet connection (11c) of the second channel (7).

12. Water connection arrangement (1) according to any one of the preceding claims, **characterized in that** shut-off devices are provided in the water outlet connections (10a-10c, 11a-11c) of the distributor collector (2).

13. Water connection arrangement (1) according to any one of the preceding claims, **characterized in that** the water treatment devices (3a-3d) comprise valves for shutting off the water flow from the distributor collector (2) and to the distributor collector (2).

14. Water connection arrangement (1) according to any one of the preceding claims, **characterized in that** valve components (15) are arranged in each case between the water outlet connections (10a-10c, 11a-11c) and the water treatment devices (3a-3d) for shutting off the water flow from the distributor collector (2) to the water treatment device (3a-3d) and from the water treatment device (3a-3d) to the distributor collector (2).

15. Water connection arrangement (1) according to any one of the preceding claims, **characterized in that** each water treatment device (3a-3d) is connected to the water outlet connections (10a-10c, 11a-11c) in such a manner that the position of the water treatment devices (3a-3d) can be adjusted in height.

16. Water connection arrangement (1) according to any one of the preceding claims, **characterized in that** each water treatment device (3a-3d) is sealingly connected to the water outlet connections (10a-10c, 11a-11c) of the distributor collector (2) by means of two S-shaped tubes (24a-24d), wherein each S-shaped tube (24a-24d) is supported at both ends thereof such that it can be rotated relative to the water treatment device (3a-3d) and relative to the water outlet connection (10a-10c, 11a-11c).

17. Water connection arrangement (1) according to any one of the preceding claims, **characterized in that** the first and the second supply connection (4, 5) are each formed with a flange connection (4b, 5b) which has a circular connection opening.

## Revendications

1. Système de raccordement d'eau (1), comprenant un distributeur d'eau et collecteur d'eau combiné, appelé dans la suite distributeur/collecteur (2), lequel distributeur/collecteur (2) présente
- un premier canal (6) d'extension sensiblement rectiligne, comportant plusieurs raccords de consommateur d'eau (10a-10c) vers le premier canal (6),
- un deuxième canal (7) d'extension sensiblement rectiligne, comportant plusieurs raccords de consommateur d'eau (11a-11c) vers le deuxième canal (7),
- un premier raccord d'alimentation (4) vers le premier canal (6), et
- un deuxième raccord d'alimentation (5) vers le deuxième canal (7),
les deux raccords d'alimentation (4, 5) étant formés à des extrémités opposées du distributeur/collecteur (2),
et le système de raccordement d'eau (1) présentant en outre d'autres appareils de traitement d'eau (3a-3d) qui sont respectivement raccordés à un raccord de consommateur d'eau (10a-10c) du premier canal (6) et un raccord de consommateur d'eau (11a-11c) du deuxième canal (7),
**caractérisé en ce**
**que** le premier canal (6) et le deuxième canal (7) sont formés au moins sur certaines parties dans un tube commun (8) du distributeur/collecteur (2),
**que** le distributeur/collecteur (2) est de conception modulaire avec
- une première pièce terminale (12),
- une deuxième pièce terminale (14),
- une ou plusieurs pièces intermédiaires (13a-13c), chaque pièce intermédiaire (13a-13c) formant une partie du premier canal (6) avec au moins un raccord de consommateur d'eau (10a-10c) et une partie du deuxième canal (7) avec au moins un raccord de consommateur d'eau (11a-11c),
**que** la première pièce terminale (12), lesdites une ou plusieurs pièces intermédiaires (13a-13c) et la deuxième pièce terminale (14) sont reliées ensemble de manière étanche,
**que** le premier raccord d'alimentation (4) est orienté coaxialement au deuxième raccord d'alimentation (5), le premier raccord d'alimentation (4) étant formé sur la première pièce terminale (12) et le deuxième raccord d'alimentation (5) étant formé sur la deuxième pièce terminale (14),
**que** la partie du premier canal (6) de la pièce intermédiaire (13c) qui est reliée de manière étanche à la deuxième pièce terminale (14) est fermée avec un premier élément d'étanchéité (26a) du côté de la deuxième pièce terminale (14),
**que** la partie du deuxième canal (7) de la pièce intermédiaire (13a) qui est reliée de manière étanche à la première pièce terminale (12) est fermée avec un deuxième élément d'étanchéité (26b) du côté de la première pièce terminale (12).

2. Système de raccordement d'eau (1) selon la revendication 1, **caractérisé en ce que** le premier canal (6) est réalisé sous la forme d'un canal central (6a) et le deuxième canal (7) sous la forme d'un canal annulaire (7a) entourant le canal central (6a).

3. Système de raccordement d'eau (1) selon la revendication 1 ou 2, **caractérisé en ce que** le distributeur/collecteur (2) présente un ou plusieurs dispositifs de mesure (19a, 19b, 20a, 20b) pour la commande des appareils de traitement d'eau (3a-3d), lesdits un ou plusieurs dispositifs de mesure (19a, 19b, 20a, 20b) étant en particulier conçus pour détecter une qualité de l'eau dans le distributeur/collecteur (2) et/ou une température d'eau dans le distributeur/collecteur (2) et/ou une quantité d'eau s'écoulant à travers le distributeur/collecteur (2).

4. Système de raccordement d'eau (1) selon l'une des revendications précédentes, **caractérisé en ce que** le premier élément d'étanchéité (26a) et le deuxième élément d'étanchéité (26b) sont réalisés en caoutchouc.

5. Système de raccordement d'eau (1) selon l'une des revendications précédentes, **caractérisé en ce qu'**au moins un dispositif de mesure (19a, 19b, 20a, 20b) est disposé dans la première pièce terminale (12) et/ou la deuxième pièce terminale (14).

6. Système de raccordement d'eau (1) selon l'une des revendications précédentes, **caractérisé en ce que** le premier élément d'étanchéité (26a) est serré entre la pièce intermédiaire (13c), qui est reliée de manière étanche à la deuxième pièce terminale (14), et la deuxième pièce terminale (14).

7. Système de raccordement d'eau (1) selon l'une des revendications précédentes, **caractérisé en ce que** le deuxième élément d'étanchéité (26b) est serré entre la pièce intermédiaire (13a), qui est reliée de manière étanche à la première pièce terminale (12), et la première pièce terminale (12).

8. Système de raccordement d'eau (1) selon l'une des revendications précédentes, **caractérisé en ce qu'**au moins une pièce intermédiaire (13a-13c) présente, sur un premier côté, un raccord de consommateur d'eau (10a-10c) vers le premier canal (6) et un raccord de consommateur d'eau (11a-11c) vers le deuxième canal (7), et de même, sur un deuxième côté opposé au premier, un raccord de consommateur d'eau (10a-10c) vers le premier canal (6) et un raccord de consommateur d'eau (11a-11c) vers le deuxième canal (7).

9. Système de raccordement d'eau (1) selon l'une des revendications précédentes, **caractérisé en ce que** le distributeur/collecteur (2) présente un dispositif d'arrêt pour arrêter un courant d'eau entre le premier raccord d'alimentation (4) et le deuxième raccord d'alimentation (5).

10. Système de raccordement d'eau (1) selon l'une des revendications précédentes, **caractérisé en ce que** le système de raccordement d'eau (1) comprend une dérivation (23) qui relie le premier canal (6) au deuxième canal (7), la dérivation (23) présentant une vanne de dérivation (22a, 22b) qui permet de régler un courant d'eau entre le premier canal (6) et le deuxième canal (7) à travers la dérivation (23).

11. Système de raccordement d'eau (1) selon la revendication 10, **caractérisé en ce que** la dérivation (23) relie directement entre eux un raccord de consommateur d'eau (10c) du premier canal (6) et un raccord de consommateur d'eau (11c) du deuxième canal (7).

12. Système de raccordement d'eau (1) selon l'une des revendications précédentes, **caractérisé en ce que** des dispositifs d'arrêt sont prévus dans les raccords de consommateur d'eau (10a-10c, 11a-11c) du distributeur/collecteur (2).

13. Système de raccordement d'eau (1) selon l'une des revendications précédentes, **caractérisé en ce que** les appareils de traitement d'eau (3a-3d) présentent des vannes pour arrêter le courant d'eau du distributeur/collecteur (2) et vers le distributeur/collecteur (2).

14. Système de raccordement d'eau (1) selon l'une des revendications précédentes, **caractérisé en ce que** des éléments de vanne (15) sont chaque fois disposés entre les raccords de consommateur d'eau (10a-10c, 11a-11c) et les appareils de traitement d'eau (3a-3d) pour arrêter le courant d'eau du distributeur/collecteur (2) vers l'appareil de traitement d'eau (3a-3d) et de l'appareil de traitement d'eau (3a-3d) vers le distributeur/collecteur (2).

15. Système de raccordement d'eau (1) selon l'une des revendications précédentes, **caractérisé en ce que** les appareils de traitement d'eau (3a-3d) sont chaque fois reliés aux raccords de consommateur d'eau (10a-10c, 11a-11c) de telle sorte que la position des appareils de traitement d'eau (3a-3d) soit réglable en hauteur.

16. Système de raccordement d'eau (1) selon l'une des revendications précédentes, **caractérisé en ce que** les appareils de traitement d'eau (3a-3d) sont chaque fois reliés de manière étanche aux raccords de consommateur d'eau (10a-10c, 11a-11c) du distributeur/collecteur (2) au moyen de deux tubes en forme de S (24a-24d), les tubes en forme de S (24a-24d) étant chaque fois montés à leurs deux extrémités de manière à pouvoir tourner par rapport à l'appareil de traitement (3a-3d) et par rapport au raccord de consommateur d'eau (10a-10c, 11a-11c).

17. Système de raccordement d'eau (1) selon l'une des revendications précédentes, **caractérisé en ce que** le premier et le deuxième raccord d'alimentation (4, 5) sont chaque fois réalisés avec un raccord à bride (4b, 5b) qui présente une ouverture de raccordement circulaire.
